# EUROPEAN PATENT SPECIFICATION

(11) **EP 3 353 733 B1**
(45) Date of publication and mention of the grant of the patent: **12.07.2023**
(21) Application number: 16849357.5
(22) Date of filing: 14.09.2016
(51) Int. Cl.: H04L 67/303, H04L 9/40, H04L 67/04, H04L 67/10, H04L 67/52, G06Q 20/38, G06Q 20/32, G06Q 20/40, H04W 4/029

(54) **METHOD AND SYSTEM FOR FRAUD DETECTION USING A MOBILE COMMUNICATION DEVICE**
VERFAHREN UND SYSTEM ZUR BETRUGSERKENNUNG MITTELS EINER MOBILKOMMUNIKATIONSVORRICHTUNG
PROCÉDÉ ET SYSTÈME DE DÉTECTION DE FRAUDE À L'AIDE D'UN DISPOSITIF DE COMMUNICATION MOBILE

(30) Priority: 23.09.2015 US 201514862617
(43) Date of publication of application: 01.08.2018
(73) Proprietor: Mastercard International Incorporated, Purchase, New York 10577 (US)
(72) Inventor: SIDHU, Navjot, Ardsley, NY 10502 (US); HIVELY, Corey, O'Fallon, MO 63367 (US); DHALA, Amyn, Edison, NJ 08820 (US)
(74) Representative: Gill Jennings & Every LLP
(86) International application number: PCT/US2016/051605
(87) International publication number: WO 2017/053140

(56) References cited:
- JP-A- 2004 157 821
- JP-A- 2008 134 849
- JP-A- 2009 289 063
- US-A1- 2007 055 672
- US-A1- 2015 032 621
- US-A1- 2015 100 495
- US-A1- 2015 186 891
- US-B2- 8 892 461

## Description

### FIELD

The present disclosure relates to detecting fraud in electronic transactions using a mobile communication device, specifically the determination of a confidence level for a mobile communication device for the provisioning of a token thereto for an electronic transaction based on mobile device and transaction account areas of validity.

### BACKGROUND

As mobile communication devices, such as cellular phones, smart phones, smart watches, wearable computing devices, implantable computing devices, etc., become more and more prevalent, methods are continuously being developed to enable consumers to use their mobile communication device to participate in electronic payment transactions. Mobile communication devices are now configured to not only initiate e-commerce transactions via the Internet and cellular communication networks, but to also store sensitive payment details associated with transaction accounts, which can be transmitted to a merchant point of sale for a transaction, replacing the use of a traditional, physical payment card.

However, as with any payment method, merchants, consumers, and financial institutions are often concerned with the possibility of fraud. Unlike traditional, physical payment cards, mobile communication devices can be subject to more than just theft due to their connection to vast cellular communication networks and other communication methods. As such, many methods have been developed to more securely store and provision payment credentials on mobile communication devices, for the secure transmission of the payment credentials from the mobile communication device to a point of sale, and to ensure that the person using the mobile communication device is authorized. Such methods often involve combined authentication of the user of the mobile communication device and the transaction account being used, such as via a personal identification number or other type of password. Other methods include identifying the geographic location of the mobile communication device tied to the transaction account and comparing it to a geographic location of an attempted transaction using the transaction account, to ensure the device, and theoretically the consumer, are where the transaction is occurring.

However, as such methods are developed fraudsters are constantly identifying ways to combat such developments. For example, if the mobile communication device is stolen and/or its payment/mobile identification credentials cloned, a fraudster may be able to conduct a number of payment transactions using the stolen device before the consumer is able to report the theft and have the transaction account and/or mobile communication device locked. Thus, there is a need for a technical solution where the security involved in the use of a mobile communication device in carrying out a payment transaction is greatly increased, with the resulting confidence level of transactions for the consumers, merchants, and financial institutions subsequently increased.

US20150100495A1 discusses systems and methods for providing tokenized transaction accounts. US8892461B2 discusses mobile device user behavior analysis and authentication.

### SUMMARY

The present disclosure provides a description of systems and methods for determining a confidence level for provisioning of a token to a mobile device based on device data.

A method for determining a confidence level for provisioning of a token to a mobile device based on device data is described according to appended claim 1..

A system for determining a confidence level for provisioning of a token to a mobile device based on device data is described according to appended claim 10.

### BRIEF DESCRIPTION OF THE DRAWING FIGURES

The scope of the present disclosure is best understood from the following detailed description of exemplary embodiments when read in conjunction with the accompanying drawings. Included in the drawings are the following figures:
FIG. 1 is a block diagram illustrating a high level system architecture for the determining of confidence levels for mobile communication devices used in payment transactions in accordance with exemplary embodiments.
FIG. 2 is a block diagram illustrating the processing server of FIG. 1 for the determination of a confidence level for a mobile communication device in accordance with exemplary embodiments.
FIG. 3 is a flow diagram illustrating a process for provisioning a payment token to a mobile communication device based on a confidence level determined using the system of FIG. 1 in accordance with exemplary embodiments.
FIG. 4 is a diagram illustrating the determination of confidence levels for a mobile communication device using geographic areas of validity in accordance with exemplary embodiments.
FIG. 5 is a flow diagram illustrating an exemplary method determining a confidence level for provisioning of a token to a mobile device based on device data in accordance with exemplary embodiments.
FIG. 6 is a flow diagram illustrating the processing of a payment transaction in accordance with exemplary embodiments.
FIG. 7 is a block diagram illustrating a computer system architecture in accordance with exemplary embodiments.

Further areas of applicability of the present disclosure will become apparent from the detailed description provided hereinafter. It should be understood that the detailed description of exemplary embodiments are intended for illustration purposes only and are, therefore, not intended to necessarily limit the scope of the disclosure.

### DETAILED DESCRIPTION

### Glossary of Terms

Payment Network - A system or network used for the transfer of money via the use of cash-substitutes. Payment networks may use a variety of different protocols and procedures in order to process the transfer of money for various types of transactions. Transactions that may be performed via a payment network may include product or service purchases, credit purchases, debit transactions, fund transfers, account withdrawals, etc. Payment networks may be configured to perform transactions via cash-substitutes, which may include payment cards, letters of credit, checks, transaction accounts, etc. Examples of networks or systems configured to perform as payment networks include those operated by MasterCard^{®}, VISA^{®}, Discover^{®}, American Express^{®}, PayPal^{®}, etc. Use of the term "payment network" herein may refer to both the payment network as an entity, and the physical payment network, such as the equipment, hardware, and software comprising the payment network.

Transaction Account - A financial account that may be used to fund a transaction, such as a checking account, savings account, credit account, virtual payment account, etc. A transaction account may be associated with a consumer, which may be any suitable type of entity associated with a payment account, which may include a person, family, company, corporation, governmental entity, etc. In some instances, a transaction account may be virtual, such as those accounts operated by PayPal^{®}, etc.

Payment Card - A card or data associated with a transaction account that may be provided to a merchant in order to fund a financial transaction via the associated transaction account. Payment cards may include credit cards, debit cards, charge cards, stored-value cards, prepaid cards, fleet cards, virtual payment numbers, virtual card numbers, controlled payment numbers, etc. A payment card may be a physical card that may be provided to a merchant, or may be data representing the associated transaction account (e.g., as stored in a communication device, such as a smart phone or computer). For example, in some instances, data including a payment account number may be considered a payment card for the processing of a transaction funded by the associated transaction account. In some instances, a check may be considered a payment card where applicable.

Merchant - An entity that provides products (e.g., goods and/or services) for purchase by another entity, such as a consumer or another merchant. A merchant may be a consumer, a retailer, a wholesaler, a manufacturer, or any other type of entity that may provide products for purchase as will be apparent to persons having skill in the relevant art. In some instances, a merchant may have special knowledge in the goods and/or services provided for purchase. In other instances, a merchant may not have or require and special knowledge in offered products. In some embodiments, an entity involved in a single transaction may be considered a merchant. In some instances, as used herein, the term "merchant" may refer to an apparatus or device of a merchant entity.

Issuer - An entity that establishes (e.g., opens) a letter or line of credit in favor of a beneficiary, and honors drafts drawn by the beneficiary against the amount specified in the letter or line of credit. In many instances, the issuer may be a bank or other financial institution authorized to open lines of credit. In some instances, any entity that may extend a line of credit to a beneficiary may be considered an issuer. The line of credit opened by the issuer may be represented in the form of a payment account, and may be drawn on by the beneficiary via the use of a payment card. An issuer may also offer additional types of payment accounts to consumers as will be apparent to persons having skill in the relevant art, such as debit accounts, prepaid accounts, electronic wallet accounts, savings accounts, checking accounts, etc., and may provide consumers with physical or non-physical means for accessing and/or utilizing such an account, such as debit cards, prepaid cards, automated teller machine cards, electronic wallets, checks, etc. In some instances, as used herein, the term "issuer" may refer to an apparatus or device of an issuer entity.

Payment Transaction - A transaction between two entities in which money or other financial benefit is exchanged from one entity to the other. The payment transaction may be a transfer of funds, for the purchase of goods or services, for the repayment of debt, or for any other exchange of financial benefit as will be apparent to persons having skill in the relevant art. In some instances, payment transaction may refer to transactions funded via a payment card and/or payment account, such as credit card transactions. Such payment transactions may be processed via an issuer, payment network, and acquirer. The process for processing such a payment transaction may include at least one of authorization, batching, clearing, settlement, and funding. Authorization may include the furnishing of payment details by the consumer to a merchant, the submitting of transaction details (e.g., including the payment details) from the merchant to their acquirer, and the verification of payment details with the issuer of the consumer's payment account used to fund the transaction. Batching may refer to the storing of an authorized transaction in a batch with other authorized transactions for distribution to an acquirer. Clearing may include the sending of batched transactions from the acquirer to a payment network for processing. Settlement may include the debiting of the issuer by the payment network for transactions involving beneficiaries of the issuer. In some instances, the issuer may pay the acquirer via the payment network. In other instances, the issuer may pay the acquirer directly. Funding may include payment to the merchant from the acquirer for the payment transactions that have been cleared and settled. It will be apparent to persons having skill in the relevant art that the order and/or categorization of the steps discussed above performed as part of payment transaction processing.

### System for Determining Confidence Level for a Mobile Communication Device

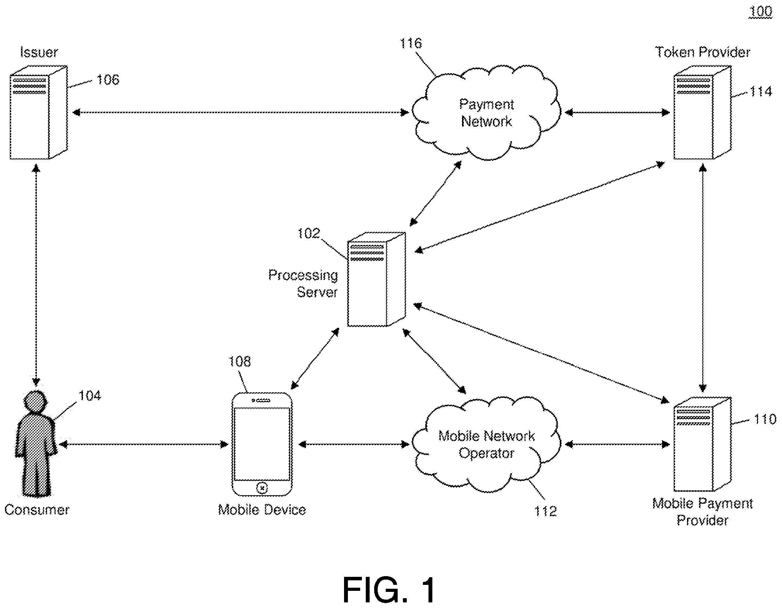

FIG. 1 illustrates a system 100 for the determination of a confidence level for a mobile communication device for the provisioning of payment tokens thereto for use in payment transactions, where the confidence level is based on geographic areas of validity for both the mobile device and transaction account as well as device data of the mobile device.

The system 100 may include a processing server 102. The processing server 102, discussed in more detail below, may be configured to determine confidence levels for a mobile communication device to be used in provisioning payment details for a payment transaction. In the system 100, a consumer 104 may have a transaction account with an issuer 106. The issuer 106 may be a financial institution, such as an issuing bank, or other entity that manages, owns, operates, or is otherwise associated with a transaction account that may be used by the consumer 104 for payment of a payment transaction. The transaction account may be, for example, a payment card account. As used herein, "issuer" may refer to the entity or one or more computing systems and/or devices configured to perform the functions of the entity as discussed herein.

The consumer 104 may be associated with a mobile device 108. The mobile device 108 may be any type of mobile communication device suitable for performing the functions discussed herein, such as a cellular phone, smart phone, smart watch, tablet computer, wearable computing device, implantable computing device, etc. The mobile device 108 may be configured to store payment details and payment tokens associated with the transaction account of the consumer 104 that is associated with the issuer 106. Payment tokens may be provisioned to the mobile device 108 by a mobile payment provider 110. The mobile payment provider 110 may be an entity configured to provision payment tokens and other payment details to mobile devices 108 for use in conducting payment transactions.

Communications between the mobile payment provider 110 and mobile device 108 may be routed through a cellular communication network or other suitable type of mobile communication network, such as a local area network, wireless area network, radio frequency network, the Internet, etc., via a mobile network operator 112. The mobile network operator 112 may be an entity associated with the mobile device 108, such as a mobile carrier, configured to operate, manage, own, or otherwise be associated with a communication network used by the mobile device 108. The mobile network operator 112 may, for example, manage communications using a mobile communication network such that payment tokens and other data electronically transmitted from the mobile payment provider 110 to the mobile device 108 may be routed via the mobile network operator 112.

In some embodiments, payment tokens may be provided to the mobile payment provider 110 by a token provider 114. The token provider 114 may be, for example, an entity specially configured to generate and provide payment tokens for payment transactions. Payment tokens may be comprised of payment details and unique data that is suitable for use in a single or a limited number of payment transactions, such as to increase security of transactions in which a mobile device 108 is involved. Data included in payment tokens and processes for provisioning thereof to mobile devices 108 will be apparent to persons having skill in the relevant art.

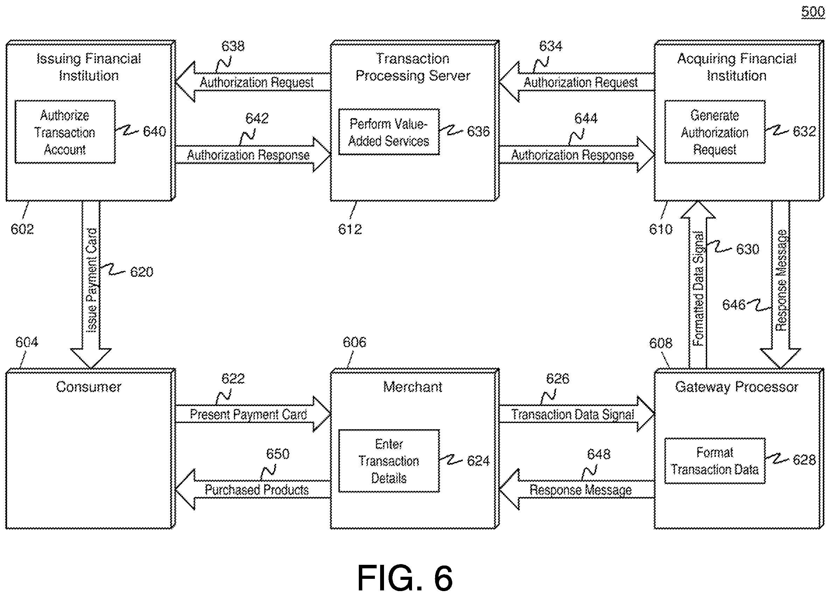

The system 100 may also include a payment network 116. The payment network 116 may be configured to process payment transactions using traditional methods and systems, such as discussed in more detail below with respect to the process 600 illustrated in FIG. 6. The payment network may be configured to receive transaction messages from merchants, financial institutions, and other entities for use in processing payment transactions. Transaction messages may be specially formatted data messages that are communicated using specialized payment rails, discussed below, that are formatted pursuant to one or more standards governing the exchange of financial transaction messages, such as the International Organization of Standardization's ISO 8583 standard. Each transaction message may include a plurality of data elements configured to store data associated with the payment transaction, such as a transaction amount, transaction time, transaction device, primary account number, geographic location, merchant identifier, merchant data, consumer data, product data, issuer data, acquirer data, reward data, loyalty data, offer data, point of sale data, etc. In instances where a mobile device 108 may be used in a payment transaction, the related transaction message may also include data elements or an addendum configured to store data associated with the mobile device 108.

In some embodiments, one or more of the components of the system 100 illustrated in FIG. 1 may be configured to perform the functions of one or more other components. For example, each of the processing server 102, mobile payment provider 110, token provider 114, payment network 116, and/or issuer 106 may be combined to perform the functions of the constituent entities. For instance, the processing server 102 may be configured to perform the functions of a token provider 114 and mobile payment provider 110, including the generation, storage, and provisioning of payment tokens to mobile devices 108.

The processing server 102 may be configured to determine a confidence level for the mobile device 108 for the provisioning of payment tokens to the mobile device 108 for use in payment transactions. The processing server 102 may determine the confidence level based on at least device data associated with the mobile device 108, and individual geographic areas of validity for the mobile device 108 and the transaction account associated with the payment token to be provisioned to the mobile device 108.

The processing server 102 may receive a device fingerprint associated with the mobile device 108. The device fingerprint may be superimposed on a data signal electronically transmitted to the processing server 102 directly from the mobile device 108, the mobile network operator 112, mobile payment provider 110, token provider 114, or other entity using a suitable communication network. The device fingerprint may be a set of data associated with the mobile device 108 that is unique to the mobile device 108 or highly indicative of the mobile device 108 based on a level of specificity of the data. For example, a device fingerprint may consist of a unique identifier, such as a media access control address, registration number, serial number, identification number, phone number, e-mail address, username, etc., or may consist of a plurality of data values associated with the mobile device 108, such as an operating system type, operating system version, browsing application program, data storage size, processing type, processing speed, battery capacity, etc. The device fingerprint may be received by the processing server 102 and stored in a profile associated with the mobile device 108.

The processing server 102 may also be configured to identify geographic areas of validity for the mobile device 108 and the transaction account. The geographic area of validity for the mobile device 108 may be based on a plurality of geographic locations at which the mobile device 108 is identified. For instance, the mobile device 108, mobile network operator 112, or other entity may identify a plurality of geographic locations of the mobile device 108 using a suitable method, such as the global positioning system, cellular network triangulation, wireless network location, etc. The plurality of geographic locations may be superimposed on a data signal electronically transmitted to the processing server 102 via a suitable communication network. In some instances, the plurality of geographic locations may be identified during a predetermined period of time (e.g., within the past month, past six months, past year, etc.), at predetermined times (e.g., of day, of the week, of the month, etc.), etc.

The processing server 102 may identify a geographic area of validity for the mobile device 108 based on the geographic locations. The geographic area of validity may be an area associated with the mobile device 108 based on the geographic locations inside of which the mobile device 108 may be expected to be during payment transactions. The geographic area of validity may be a polygonal or non-polygonal area that encompasses each or a plurality (e.g., negating outliers) of the geographic locations, may be a prior defined geographic area (e.g., a zip code, postal code, neighborhood, city, county, combination thereof, etc.), or other suitable type of area that may be identified based on the plurality of geographic locations. In some instances, the consumer 104 may specify the type of area used as the geographic are of validity. In some cases, the processing server 102 may identify the geographic area of validity and provide the identified area to the consumer 104 for confirmation, such as to ensure the accuracy of the area. In such cases, the processing server 102 may electronically transmit a data signal superimposed with the identified geographic area of validity to the mobile device 108 (e.g., via the communication network of the mobile network operator 112). The consumer 104 may review the area using the mobile device 108, may make changes (e.g., by adding or removing geographic locations used in identification of the area, changing the type of area, etc.), and may return confirmation and any changes in a data signal electronically transmitted back to the processing server 102. The processing server 102 may then adjust the geographic area of validity if necessary.

The processing server 102 may also identify a geographic area of validity for the transaction account associated with a payment token to be provisioned to the mobile device 108. The geographic area of validity for the transaction account may be identified and confirmed using the same processes as the geographic area of validity for the mobile device 108, but with the plurality of geographic locations being associated with the transaction account. The geographic locations may be geographic locations of payment transactions involving the transaction account. The geographic locations may be captured from transaction messages for the related payment transactions received by the payment network 116, where the payment transactions involve the transaction account (e.g., where the data element configured to store a primary account number includes a primary account number associated with the transaction account). The geographic locations may be electronically transmitted to the processing server 102 from the payment network 116 or other entity, such as the issuer 106, using the payment rails or a suitable communication network. In some instances, the payment network 116 may electronically transmit the transaction messages themselves to the processing server 102 using the payment rails. The processing server 102 may parse (e.g., deconstruct into constituent elements) data signals superimposed with the transaction messages to obtain the data elements and data stored therein, including the geographic location for each transaction. Once the geographic locations are received, the processing server 102 may identify a geographic area of validity for the transaction account.

In some instances, the processing server 102 may use different methods for identifying the geographic area of validity for the mobile device 108 and for the transaction account. For example, the geographic area of validity for the mobile device 108 may be a polygonal area that encompasses each geographic location, while the geographic area of validity for the transaction account may be a circular area that is a predetermined distance (e.g., based on the geographic locations) from a centroid of the geographic locations for the payment transactions involving the transaction account.

Once the device fingerprint and both geographic areas of validity are identified for the mobile device 108 and transaction account, the processing server 102 may be configured to determine a confidence level for the mobile device 108. The confidence level determination may be initiated by the receipt of a data signal electronically transmitted to the processing server 102 that is superimposed with a confidence level request. The confidence level request may be electronically transmitted by the mobile device 108, mobile payment provider 110, token provider 114, or other entity, and may include at least a device fingerprint associated with the mobile device 108 for which the confidence level is requested and a current geographic location of the mobile device 108 at or near the time the confidence level is requested.

The processing server 102 may then identify a confidence level that is based on a comparison of the device fingerprint parsed from the confidence level request and the device fingerprint stored in the profile associated with the mobile device 108, as well as a comparison of the current location of the mobile device 108 with the geographic areas of validity for both the mobile device 108 and the transaction account associated therewith. The current location may be a location of the mobile device 108 identified within a predetermined period of time of the identification of the confidence level. For example, the predetermined period of time may be five minutes, but can be dynamically set according to the type of geographic location (e.g., highway verse interior of a mall or home) or based on the recent history of the location of the mobile device (e.g., travelling or stationary). The predetermined period of time may also vary due to technological limitations and accuracy, but may be such that the current location is representative of the location of the mobile device 108 at the time the confidence level is identified. In some instances, the confidence level may be based on a difference in the time at which the location of the mobile device 108 was identified to the time at which the confidence level is being identified as a factor. The confidence level may also be based on a tolerance set by the processing server 102 or other entity, such as the mobile payment provider 110, token provider 114, issuer 106, or the consumer 104, For example, in some instances, the confidence level may be at a low level of confidence (e.g., not suitable for provisioning of a payment token) if the current location of the mobile device 106 is outside of either geographic area of validity. In other instances, the confidence level may be at an acceptable level for provisioning of a payment token if the current location is inside of one geographic area of validity and still near (e.g., based on the tolerance level) the second geographic area of validity or an outlier associated therewith.

Once the confidence level is determined, the processing server 102 may electronically transmit a data signal superimposed with the confidence level as a response to the received confidence level request using a suitable communication network. In some instances, the data signal may be superimposed with an instruction to provision a payment token to the mobile device 108 if the confidence level is above an acceptable threshold level, such as may be set forth by the issuer 106, consumer 104, token provider 114, mobile payment provider 110, etc. In embodiments where the processing server 102 is the token provider 114 and/or mobile payment provider 110, the processing server 102 may provision a payment token to the mobile device 108 for use in a payment transaction using the associated transaction account based on the determined confidence level as a response to the received confidence level request.

Once the payment token is provisioned to the mobile device 108, the consumer 104 may use the mobile device 108 to provide payment details to a merchant point of sale during a payment transaction. The payment network 116 may process the payment transaction accordingly, which may include evaluation of the payment details and/or payment token, which may also include evaluation by the token provider 114 or based on data provided therefrom. Methods and systems for the use of payment tokens in the processing of a payment transaction will be apparent to persons having skill in the relevant art.

The methods and systems discussed herein may provide for the determination of confidence levels for use in provisioning payment tokens to mobile devices 108 that provides a higher level of security than traditional methods for security and fraud detection in the provisioning and use of payment tokens with mobile devices. The specially configured and programmed processing server 102 utilizes at least three disparate data types, the device fingerprint, the geographic area of validity for the mobile device 108, and the geographic area of validity for the transaction account, to determine a confidence level with regard to the mobile device 108 to which a payment token associated with the transaction account is to be provisioned. By taking into account each of these disparate items of data, the confidence level determined by the processing server 102 may be more effective than any determination used in traditional systems due to the additional layers of security. In addition, the technical improvements provided by the processing server 102 are such that token providers 114, mobile payment providers 110, and other entities may act based on the determination of the processing server 102 without significant modification to existing systems, thus resulting in a technological advancement that is also efficient for other entities involved in the token provisioning and processing processes.

### Processing Server

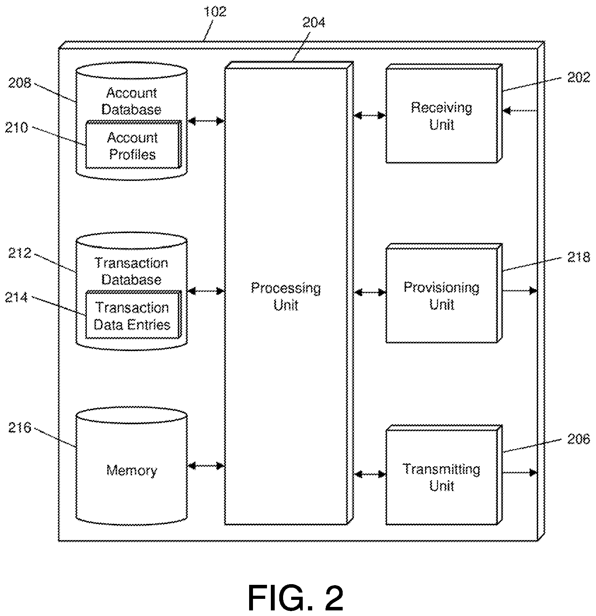

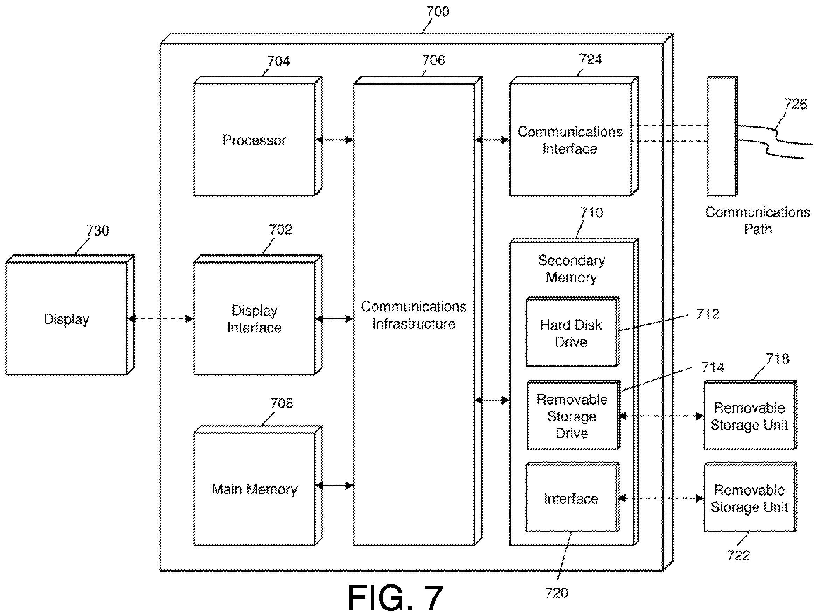

FIG. 2 illustrates an embodiment of the processing server 102 of the system 100. It will be apparent to persons having skill in the relevant art that the embodiment of the processing server 102 illustrated in FIG. 2 is provided as illustration only and may not be exhaustive to all possible configurations of the processing server 102 suitable for performing the functions as discussed herein. For example, the computer system 700 illustrated in FIG. 7 and discussed in more detail below may be a suitable configuration of the processing server 102.

The processing server 102 may include a receiving unit 202. The receiving unit 202 may be configured to receive data over one or more networks via one or more network protocols. In some embodiments, the receiving unit 202 may be configured to receive data over the payment rails, such as using specially configured infrastructure associated with payment networks 116 for the transmission of transaction messages that include sensitive financial data and information. In some instances, the receiving unit 202 may also be configured to receive data from issuers 106, mobile devices 108, mobile network operators 112, mobile payment providers 110, token providers 114, payment networks 116, and other entities via alternative networks, such as the Internet. In some embodiments, the receiving unit 202 may be comprised of multiple units, such as different receiving units for receiving data over different networks, such as a first receiving unit for receiving data over payment rails and a second receiving unit for receiving data over the Internet. The receiving unit 202 may receive electronically data signals that are transmitted, where data may be superimposed on the data signal and decoded, parsed, read, or otherwise obtained via receipt of the data signal by the receiving unit 202. In some instances, the receiving unit 202 may include a parsing module for parsing the received data signal to obtain the data superimposed thereon. For example, the receiving unit 202 may include a parser program configured to receive and transform the received data signal into usable input for the functions performed by the processing unit to carry out the methods and systems described herein.

The receiving unit 202 may be configured to receive transaction data from the payment network 116, issuer 106, or other entity. The transaction data may be superimposed on data signals electronically transmitted therefrom, and may include at least a geographic location for each payment transaction. In some instances, transaction data for each transaction may include an account identifier (e.g., a primary account number or other suitable value) associated with the transaction account involved in the related payment transaction. In some embodiments, the transaction data may be transmitted via transaction messages transmitted to the processing server 102 via the payment rails, which may be received and parsed by the receiving unit 202 to obtain the data stored therein. The receiving unit 202 may also be configured to receive data signals superimposed with geographic locations from the mobile device 108, mobile network operator 112, or other entity, as well as data signals superimposed with device fingerprints of mobile devices 108. The receiving unit 202 may be further configured to receive a data signal superimposed with a confidence level request from the mobile device 108, mobile payment provider 110, token provider 114, etc., which may include at least a device fingerprint for the mobile device 108 for which the confidence level is requested and a current location of the mobile device 108. In some instances, the request may also include an account identifier for the transaction account associated with a payment token to be provisioned to the mobile device 108.

The processing server 102 may include an account database 208. The account database 208 may be configured to store a plurality of account profiles 210 using a suitable data storage format and schema. Each account profile 210 may include a standardized set of data associated with a transaction account for which a confidence level may be requested. Each account profile 210 may include at least an account identifier associated with the related transaction account and a device fingerprint associated with a mobile device 108. In some instances, an account profile 210 may also be configured to store geographic locations, such as received by the receiving unit 202 as associated with the related transaction account or mobile device 108 for the account profile 210. In some embodiments, an account profile 210 may be further configured to store one or more payment tokens associated with the related transaction account.

The processing server 102 may also include a processing unit 204. The processing unit 204 may be configured to perform the functions of the processing server 102 discussed herein as will be apparent to persons having skill in the relevant art. In some embodiments, the processing unit 204 may include and/or be comprised of a plurality of engines and/or modules specially configured to perform one or more functions of the processing unit 204. As used herein, the term "module" may be software or hardware particularly programmed to receive an input, perform one or more processes using the input, and provide an output. The input, output, and processes performed by various modules will be apparent to one skilled in the art based upon the present disclosure.

For example, the processing unit 204 may include a querying module configured to query databases included in the processing server 102 to identify information stored therein. The querying module may be configured to receive a query string and/or data for inclusion therein, may execute a query based thereon on a database, and may output one or more data sets or values identified as a result of execution of the query. The querying module may be configured to execute a query on the account database 208 to identify an account profile 210 stored therein, such as based on an account identifier. For example, the querying module may identify an account profile 210 corresponding to a received confidence level request where the account profile 210 includes the account identifier parsed from the confidence level request.

The processing unit 204 may also include a validity area generation module. The validity area generation module may be configured to identify a geographic area of validity for mobile devices 108 and transaction accounts based on geographic locations associated therewith. The validity area generation module may receive a plurality of geographic locations and may identify a geographic area of validity based thereon and output the resulting area. In some instances, the validity area generation module may also receive an indication of one or more algorithms, preferences, or criteria for use in identifying the geographic area of validity. For example, the validity area generation module may receive an indication if the area is for a mobile device 108 or a transaction account, criteria for determining outliers and inclusion thereof in the identified area, an area type and/or algorithm for identification thereof, etc. In some instances, the geographic locations may be received by the receiving unit 202. In other instances, the geographic locations may be identified from an account profile 210 identified by the querying module. In some instances, geographic areas of validity identified for a mobile device 108 or transaction account may be stored in the corresponding account profile 210.

The processing unit 204 may further include a confidence determination module. The confidence determination module may be configured to determine a confidence level for use in provisioning a payment token for a transaction account to a mobile device 108 based on data associated therewith. The confidence determination module may receive at least an account profile 210 or data included therein, a confidence level request, and, if not included in the received account profile 210, the identified geographic area of validity for the mobile device 108 and transaction account for which the confidence level is to be determined. The confidence level may be determined by the confidence determination module based on (i) a comparison of the device fingerprint associated with the mobile device 108 stored in the account profile 210 and the device fingerprint parsed from the confidence level request, (ii) a comparison of the current location of the mobile device 108 parsed from the confidence level request and the geographic area of validity for the mobile device 108, and (iii) a comparison of the current location of the mobile device 108 and the geographic area of validity for the transaction account. In some instances, the determination may be further based on additional criteria, such as tolerances and/or preferences, such as with respect to the current location being outside of and/or near one or both of the geographic areas of validity.

In some embodiments, the processing unit 204 may also include a provisioning module. The provisioning module may be configured to determine if a payment token is to be provisioned to the mobile device 108 based on the confidence level as determined by the confidence determination module. The provisioning module may receive a confidence level and other suitable data, such as data for the mobile device 108, transaction account, account profile 210, etc., may make a determination based thereon, and may output an instruction to either provision a payment token to the mobile device 108 or to transmit a notification to the mobile device 108 or other requesting entity that a payment token may not be provisioned. In some instances, the processing server 102 itself may provision the payment token to the mobile device 108. In other instances, the instruction may be provided to the token provider 114 or other entity, which may proceed based on the determination by the provisioning module.

The processing server 102 may further include a transmitting unit 206. The transmitting unit 206 may be configured to transmit data over one or more networks via one or more network protocols. In some embodiments, the transmitting unit 206 may be configured to transmit data over the payment rails, such as using specially configured infrastructure associated with payment networks 116 for the transmission of transaction messages that include sensitive financial data and information, such as identified payment credentials. In some instances, the transmitting unit 206 may be configured to transmit data to issuers 106, mobile devices 108, mobile network operators 112, mobile payment providers 110, token providers 114, payment networks 116, and other entities via alternative networks, such as the Internet. In some embodiments, the transmitting unit 206 may be comprised of multiple units, such as different transmitting units for transmitting data over different networks, such as a first transmitting unit for transmitting data over the payment rails and a second transmitting unit for transmitting data over the Internet. The transmitting unit 206 may electronically transmit data signals that have data superimposed that may be parsed by a receiving computing device. In some instances, the transmitting unit 206 may include one or more modules for superimposing, encoding, or otherwise formatting data into data signals suitable for transmission.

The transmitting unit 206 may be configured to electronically transmit data signals to the mobile device 108, mobile payment provider 110, token provider 114, or other entity that are superimposed with confidence levels determined in response to received confidence level requests. In some instances, the transmitting unit 206 may be configured to provision payment tokens to a mobile device 108 or to another entity for provisioning to the mobile device 108. Methods for the provisioning of a payment token to a mobile device 108 will be apparent to persons having skill in the relevant art.

In some embodiments, the processing server 102 may also include a transaction database 212. The transaction database 212 may be configured to store a plurality of transaction data entries 214 using a suitable data storage format and schema. Each transaction data entry 214 may be configured to store a standardized data set of data related to a payment transaction, including at least an account identifier and geographic location. In some instances, each transaction data entry 214 may be comprised of or may include a transaction message formatted pursuant to one or more standards, such as the ISO 8583 standard, that may include data elements configured to store the geographic location, account identifier, and any other data associated with the related payment transaction. In such embodiments, the validity area generation module may be configured to generate a geographic area of validity for a transaction account based on the geographic location included in each transaction data entry 214 related to a payment transaction involving the transaction account, such as may be identified via a query executed on the transaction database 212 by the querying module using the account identifier associated with the transaction account.

The processing server 102 may also include a memory 216. The memory 216 may be configured to store data for use by the processing server 102 in performing the functions discussed herein. The memory 216 may be configured to store data using suitable data formatting methods and schema and may be any suitable type of memory, such as read-only memory, random access memory, etc. The memory 216 may include, for example, encryption keys and algorithms, communication protocols and standards, data formatting standards and protocols, program code for modules and application programs of the processing unit 204, and other data that may be suitable for use by the processing server 102 in the performance of the functions disclosed herein as will be apparent to persons having skill in the relevant art.

### Process for Provisioning a Token to a Mobile Device Based on Confidence Level

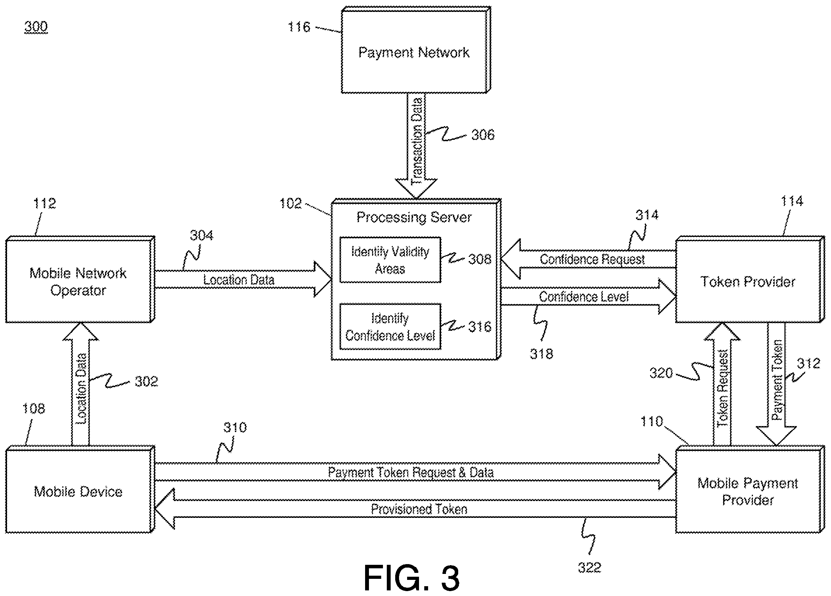

FIG. 3 illustrates a process 300 for the provisioning of a payment token to a mobile device 108 for a transaction account based on a confidence level that is determined using a device fingerprint and geographic locations of the mobile device 108 and the transaction account.

In step 302, the mobile device 108 may report its geographic location to the mobile network operator 112 at a plurality of different times. In some instances, the mobile device 108 may regularly report its geographic location to the mobile network operator 112 at predetermined intervals of time (e.g., every ten minutes, hourly, etc.), upon usage by the consumer 104, or upon interaction with a command associated thereto by the consumer 104. In some cases, the mobile network operator 112 may request the geographic location of the mobile device 108 (e.g., at predetermined intervals of time or other times), or may directly identify the geographic location of the mobile device 108 using data associated therewith. In step 304, the mobile network operator 112 may electronically transmit a data signal to the processing server 102 using a suitable communication network, the data signal being superimposed with the plurality of geographic locations associated with the mobile device 108. In some instances, the data signal may also be superimposed with identifying data, such as identifying the associated mobile device 108 and/or the account profile 210 related thereto. In some embodiments, the mobile network operator 112 may transmit a data signal to the processing server 102 each time a geographic location is identified. In other embodiments, the mobile network operator 112 may transmit a data signal superimposed with multiple geographic locations, such as at a periodic interval, when the number of geographic locations reaches a threshold, when requested by the processing server 102, etc.

In step 306, the payment network 116 may electronically transmit a data signal to the processing server 102 superimposed with transaction data. The transaction data may include a plurality of geographic locations for payment transactions involving a specific transaction account. In some instances, the transaction data may be included in specially formatted transaction messages electronically transmitted to the processing server 102 via the payment rails. In some instances, the payment network 116 may transmit data signals superimposed with transaction data for each payment transaction processed (e.g., involving one or more transaction accounts). In other instances, the payment network 106 may transmit data signals superimposed with transaction data for multiple payment transactions, such as at a periodic interval, when the number of payment transactions reaches a threshold, when requested by the processing server 102, etc.

In step 308, the validity area generation module of the processing unit 204 of the processing server 102 may identify geographic areas of validity for both the mobile device 108 and the transaction account based on the geographic locations associated therewith. In some instances, the geographic areas of validity may be stored in an account profile 210 of the account database 208 related to the mobile device 108 and transaction account for which a confidence level is to be determined.

In step 310, the mobile device 108 may electronically transmit a data signal superimposed with a payment token request to the mobile payment provider 110. The payment token request may request a payment token for use in a future transaction and may include at least the device fingerprint of the mobile device 108 and the current location of the mobile device 108 as identified by the mobile device 108 and/or the mobile network operator 112. In step 312, the mobile payment provider 110 may request a payment token for the mobile device 108 by electronically transmitting a data signal superimposed with a token request to the token provider 114. The token request may include at least the device fingerprint and current location of the mobile device 108, and may also include information identifying the transaction account with which the payment token is to be associated, such as an account identifier.

In step 314, the token provider 114 may electronically transmit a data signal superimposed with a confidence level request to the processing server 102. The confidence level request may include the data included in the token request received from the mobile payment provider 110, and may also include any additional data, such as one or more preferences or criteria regarding the confidence level, such as tolerances for the geographic areas of validity. The receiving unit 202 of the processing server 102 may receive the confidence level request, which may be parsed by the receiving unit 202 or other module of the processing server 102, and, in step 316, the confidence determination module of the processing unit 204 of the processing server 102 may determine a confidence level. The confidence level may be based on at least a comparison of the device fingerprint included in the confidence request and a previously stored device fingerprint for the mobile device 108 as well as a comparison of the current location of the mobile device 108 to the geographic areas of validity for both the mobile device 108 and the transaction account.

In step 318, the transmitting unit 206 of the processing server 102 may electronically transmit a data signal superimposed with the confidence level to the token provider 114 using a suitable communication network. In step 320, the token provider 114 may generate a payment token if the confidence level is above a predetermined threshold, which may be electronically transmitted to the mobile payment provider 110 using a suitable method and communication network. In step 322, the mobile payment provider 110 may provision the payment token to the mobile device 108 using a suitable method, for use in one or more payment transactions.

### Geographic Areas of Validity

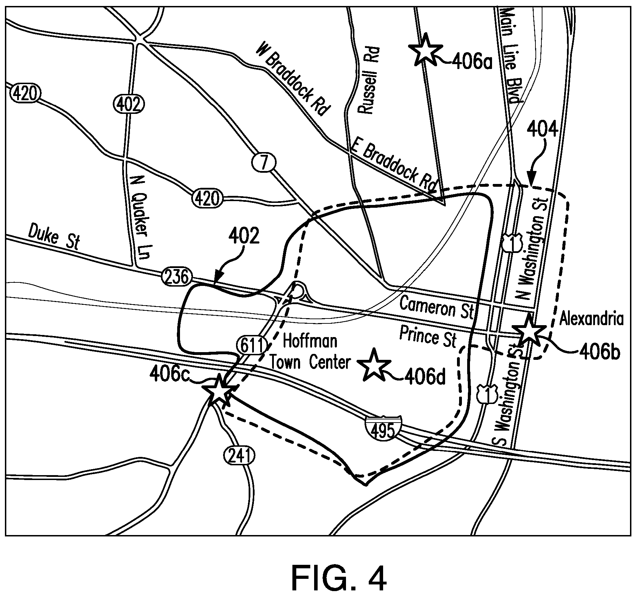

FIG. 4 illustrates the use of geographic areas of validity in the determination of a confidence level for use in provisioning a payment token to a mobile device 108.

As discussed herein, the validity area generation module may be configured to generate a geographic area of validity for a mobile device 108, as well as a geographic area of validity for a transaction account, illustrated in FIG. 4 as areas 402 and 404. As illustrated in FIG. 4, the geographic areas of validity for the mobile device 108 and transaction account may be similar, but may cover different areas due to movement and habits of the consumer 104 associated therewith.

The processing server 102 may be configured to determine a confidence level for the provisioning of a payment token to the mobile device 108 based on, among other data, a current location 406 for the mobile device 108 as compared to the geographic areas of validity. For example, the confidence determination module of the processing unit 204 of the processing server 102 may determine that the confidence level for a current location 406a is very low, due to the location being well outside of both geographic areas of validity corresponding to areas 402 and 404. If the current location 406b is used, the confidence determination module may determine that, even though the location is within the area 404, the confidence level is still below an acceptable level due to it being an unsuitable distance outside of the area 402.

If the current location 406c is used, the confidence determination may determine that the confidence level is at an acceptable level due to the current location 406c being right at the edge of both areas 402 and 404. In some instances, a determination that the confidence level is acceptable may be based on tolerances provided by the consumer 104, issuer 106, mobile payment provider 110, or other entity. The confidence determination module may determine that the confidence level is very high if the current location of the mobile device 108 is the current location 406d, because the location is directly within the areas 402 and 404 corresponding to the two geographic areas of validity.

### Exemplary Method for Determining a Confidence Level for Provisioning a Token to a Mobile Device Based on Device Data

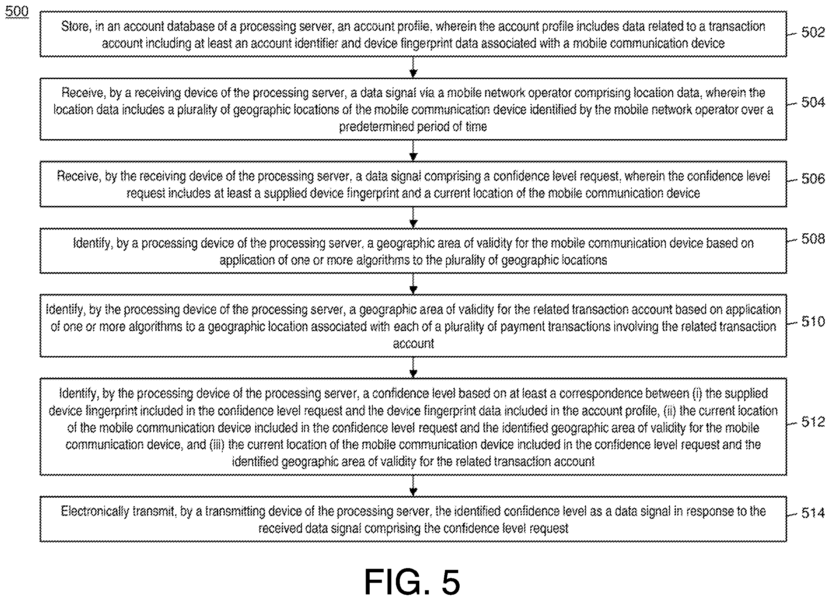

FIG. 5 illustrates a method 500 for the determination of a confidence level for use in provisioning payment tokens to a mobile device based on device data and geographic location data for the mobile device and an associated transaction account.

In step 502, an account profile (e.g., account profile 210) may be stored in an account database (e.g., the account database 208) of a processing server (e.g., the processing server 102), wherein the account profile includes data related to a transaction account including at least an account identifier and device fingerprint data associated with a mobile communication device (e.g., the mobile device 108). In step 504, a data signal comprising location data may be received by a receiving device (e.g., the receiving unit 202) of the processing server via a mobile network operator (e.g., mobile network operator 112), wherein the location data includes a plurality of geographic locations of the mobile communication device identified by the mobile network operator over a predetermined period of time.

In step 506, a data signal comprising a confidence level request may be received by the receiving device of the processing server, wherein the confidence level request includes at least a supplied device fingerprint and a current location of the mobile communication device. In step 508, a geographic area of validity for the mobile communication device may be identified by a processing device (e.g., the processing unit 204) of the processing server based on application of one or more algorithms to the plurality of geographic locations. In step 510, a geographic area of validity for the related transaction account may be identified by the processing device of the processing server based on application of one or more algorithms to a geographic location associated with each of a plurality of payment transactions involving the related transaction account.

In step 512, a confidence level may be identified by the processing device of the processing server based on at least a correspondence between (i) the supplied device fingerprint included in the confidence level request and the device fingerprint data included in the account profile, (ii) the current location of the mobile communication device included in the confidence level request and the identified geographic area of validity for the mobile communication device, and (iii) the current location of the mobile communication device included in the confidence level request and the identified geographic area of validity for the related transaction account. In step 514, the identified confidence level may be electronically transmitted by a transmitting device (e.g., the transmitting unit 206) of the processing server as a data signal in response to the received data signal comprising the confidence level request.

In one embodiment, the data signal comprising the location data may be received from the mobile communication device via the mobile network operator. In some embodiments, the method 500 may also include receiving, by the receiving device of the processing server, a data signal via a payment network comprising transaction data, wherein the transaction data includes data associated with a plurality of payment transactions involving the related transaction account including at least the respective associated geographic location.

In one embodiment, the method 500 may further include storing, in a transaction database (e.g., the transaction database 212) of the processing server, a plurality of transaction data entries (e.g., transaction data entries 214), wherein each transaction data entry includes data related to one of the plurality of payment transactions involving the related transaction account including at least the associated geographic location. In some embodiments, the account profile may further include a plurality of transaction data entries, wherein each transaction data entry includes data related to one of the plurality of payment transactions involving the related transaction account including at least the associated geographic location.

In one embodiment, the identified confidence level may be electronically transmitted as the data signal to a provisioning device of the processing server configured to provision a payment token to the mobile communication device if the identified confidence level exceeds a predetermined threshold. In a further embodiment, the account profile may be further configured to store the payment token associated with payment data corresponding to the related transaction account. In another further embodiment, the data signal comprising the confidence level request may be received from the provisioning device of the processing server.

In some embodiments, the data signal comprising the confidence level request may be received via a payment network, and the electronically transmitted data signal comprising the identified confidence level may further comprise an instruction configured to instruct a provisioning device to provision a payment token to the mobile communication device if the identified confidence level exceeds a predetermined threshold.

### Payment Transaction Processing System and Process

FIG. 6 illustrates a transaction processing system and a process 600 for the processing of payment transactions in the system. The process 600 and steps included therein may be performed by one or more components of the system 100 discussed above, such as the consumer 104, mobile device 108, processing server 102, token provider 114, mobile payment provider 110, issuer 106, payment network 116, etc. The processing of payment transactions using the system and process 600 illustrated in FIG. 6 and discussed below may utilize the payment rails, which may be comprised of the computing devices and infrastructure utilized to perform the steps of the process 600 as specially configured and programmed by the entities discussed below, including the transaction processing server 612, which may be associated with one or more payment networks configured to processing payment transactions. It will be apparent to persons having skill in the relevant art that the process 600 may be incorporated into the processes illustrated in FIGS. 3 and 5, discussed above, with respect to the step or steps involved in the processing of a payment transaction. In addition, the entities discussed herein for performing the process 600 may include one or more computing devices or systems configured to perform the functions discussed below. For instance, the merchant 606 may be comprised of one or more point of sale devices, a local communication network, a computing server, and other devices configured to perform the functions discussed below.

In step 620, an issuing financial institution 602 may issue a payment card or other suitable payment instrument to a consumer 604. The issuing financial institution may be a financial institution, such as a bank, or other suitable type of entity that administers and manages payment accounts and/or payment instruments for use with payment accounts that can be used to fund payment transactions. The consumer 604 may have a transaction account with the issuing financial institution 602 for which the issued payment card is associated, such that, when used in a payment transaction, the payment transaction is funded by the associated transaction account. In some embodiments, the payment card may be issued to the consumer 604 physically. In other embodiments, the payment card may be a virtual payment card or otherwise provisioned to the consumer 604 in an electronic format.

In step 622, the consumer 604 may present the issued payment card to a merchant 606 for use in funding a payment transaction. The merchant 606 may be a business, another consumer, or any entity that may engage in a payment transaction with the consumer 604. The payment card may be presented by the consumer 604 via providing the physical card to the merchant 606, electronically transmitting (e.g., via near field communication, wireless transmission, or other suitable electronic transmission type and protocol) payment details for the payment card, or initiating transmission of payment details to the merchant 606 via a third party. The merchant 606 may receive the payment details (e.g., via the electronic transmission, via reading them from a physical payment card, etc.), which may include at least a transaction account number associated with the payment card and/or associated transaction account. In some instances, the payment details may include one or more application cryptograms, which may be used in the processing of the payment transaction.

In step 624, the merchant 606 may enter transaction details into a point of sale computing system. The transaction details may include the payment details provided by the consumer 604 associated with the payment card and additional details associated with the transaction, such as a transaction amount, time and/or date, product data, offer data, loyalty data, reward data, merchant data, consumer data, point of sale data, etc. Transaction details may be entered into the point of sale. system of the merchant 606 via one or more input devices, such as an optical bar code scanner configured to scan product bar codes, a keyboard configured to receive product codes input by a user, etc. The merchant point of sale system may be a specifically configured computing device and/or special purpose computing device intended for the purpose of processing electronic financial transactions and communicating with a payment network (e.g., via the payment rails). The merchant point of sale system may be an electronic device upon which a point of sale system application is run, wherein the application causes the electronic device to receive and communicated electronic financial transaction information to a payment network. In some embodiments, the merchant 606 may be an online retailer in an e-commerce transaction. In such embodiments, the transaction details may be entered in a shopping cart or other repository for storing transaction data in an electronic transaction as will be apparent to persons having skill in the relevant art.

In step 626, the merchant 606 may electronically transmit a data signal superimposed with transaction data to a gateway processor 608. The gateway processor 608 may be an entity configured to receive transaction details from a merchant 606 for formatting and transmission to an acquiring financial institution 610. In some instances, a gateway processor 608 may be associated with a plurality of merchants 606 and a plurality of acquiring financial institutions 610. In such instances, the gateway processor 608 may receive transaction details for a plurality of different transactions involving various merchants, which may be forwarded on to appropriate acquiring financial institutions 610. By having relationships with multiple acquiring financial institutions 610 and having the requisite infrastructure to communicate with financial institutions using the payment rails, such as using application programming interfaces associated with the gateway processor 608 or financial institutions used for the submission, receipt, and retrieval of data, a gateway processor 608 may act as an intermediary for a merchant 606 to be able to conduct payment transactions via a single communication channel and format with the gateway processor 608, without having to maintain relationships with multiple acquiring financial institutions 610 and payment processors and the hardware associated thereto. Acquiring financial institutions 610 may be financial institutions, such as banks, or other entities that administers and manages payment accounts and/or payment instruments for use with payment accounts. In some instances, acquiring financial institutions 610 may manage transaction accounts for merchants 606. In some cases, a single financial institution may operate as both an issuing financial institution 602 and an acquiring financial institution 610.

The data signal transmitted from the merchant 606 to the gateway processor 608 may be superimposed with the transaction details for the payment transaction, which may be formatted based on one or more standards. In some embodiments, the standards may be set forth by the gateway processor 608, which may use a unique, proprietary format for the transmission of transaction data to/from the gateway processor 608. In other embodiments, a public standard may be used, such as the International Organization for Standardization's ISO 8683 standard. The standard may indicate the types of data that may be included, the formatting of the data, how the data is to be stored and transmitted, and other criteria for the transmission of the transaction data to the gateway processor 608.

In step 628, the gateway processor 608 may parse the transaction data signal to obtain the transaction data superimposed thereon and may format the transaction data as necessary. The formatting of the transaction data may be performed by the gateway processor 608 based on the proprietary standards of the gateway processor 608 or an acquiring financial institution 610 associated with the payment transaction. The proprietary standards may specify the type of data included in the transaction data and the format for storage and transmission of the data. The acquiring financial institution 610 may be identified by the gateway processor 608 using the transaction data, such as by parsing the transaction data (e.g., deconstructing into data elements) to obtain an account identifier included therein associated with the acquiring financial institution 610. In some instances, the gateway processor 608 may then format the transaction data based on the identified acquiring financial institution 610, such as to comply with standards of formatting specified by the acquiring financial institution 610. In some embodiments, the identified acquiring financial institution 610 may be associated with the merchant 606 involved in the payment transaction, and, in some cases, may manage a transaction account associated with the merchant 606.

In step 630, the gateway processor 608 may electronically transmit a data signal superimposed with the formatted transaction data to the identified acquiring financial institution 610. The acquiring financial institution 610 may receive the data signal and parse the signal to obtain the formatted transaction data superimposed thereon. In step 632, the acquiring financial institution may generate an authorization request for the payment transaction based on the formatted transaction data. The authorization request may be a specially formatted transaction message that is formatted pursuant to one or more standards, such as the ISO 8683 standard and standards set forth by a payment processor used to process the payment transaction, such as a payment network. The authorization request may be a transaction message that includes a message type indicator indicative of an authorization request, which may indicate that the merchant 606 involved in the payment transaction is requesting payment or a promise of payment from the issuing financial institution 602 for the transaction. The authorization request may include a plurality of data elements, each data element being configured to store data as set forth in the associated standards, such as for storing an account number, application cryptogram, transaction amount, issuing financial institution 602 information, etc.

In step 634, the acquiring financial institution 610 may electronically transmit the authorization request to a transaction processing server 612 for processing. The transaction processing server 612 may be comprised of one or more computing devices as part of a payment network configured to process payment transactions. In some embodiments, the authorization request may be transmitted by a transaction processor at the acquiring financial institution 610 or other entity associated with the acquiring financial institution. The transaction processor may be one or more computing devices that include a plurality of communication channels for communication with the transaction processing server 612 for the transmission of transaction messages and other data to and from the transaction processing server 612. In some embodiments, the payment network associated with the transaction processing server 612 may own or operate each transaction processor such that the payment network may maintain control over the communication of transaction messages to and from the transaction processing server 612 for network and informational security.

In step 636, the transaction processing server 612 may perform value-added services for the payment transaction. Value-added services may be services specified by the issuing financial institution 602 that may provide additional value to the issuing financial institution 602 or the consumer 604 in the processing of payment transactions. Value-added services may include, for example, fraud scoring, transaction or account controls, account number mapping, offer redemption, loyalty processing, etc. For instance, when the transaction processing server 612 receives the transaction, a fraud score for the transaction may be calculated based on the data included therein and one or more fraud scoring algorithms and/or engines. In some instances, the transaction processing server 612 may first identify the issuing financial institution 602 associated with the transaction, and then identify any services indicated by the issuing financial institution 602 to be performed. The issuing financial institution 602 may be identified, for example, by data included in a specific data element included in the authorization request, such as an issuer identification number. In another example, the issuing financial institution 602 may be identified by the primary account number stored in the authorization request, such as by using a portion of the primary account number (e.g., a bank identification number) for identification.

In step 638, the transaction processing server 612 may electronically transmit the authorization request to the issuing financial institution 602. In some instances, the authorization request may be modified, or additional data included in or transmitted accompanying the authorization request as a result of the performance of value-added services by the transaction processing server 612. In some embodiments, the authorization request may be transmitted to a transaction processor (e.g., owned or operated by the transaction processing server 612) situated at the issuing financial institution 602 or an entity associated thereof, which may forward the authorization request to the issuing financial institution 602.

In step 640, the issuing financial institution 602 may authorize the transaction account for payment of the payment transaction. The authorization may be based on an available credit amount for the transaction account and the transaction amount for the payment transaction, fraud scores provided by the transaction processing server 612, and other considerations that will be apparent to persons having skill in the relevant art. The issuing financial institution 602 may modify the authorization request to include a response code indicating approval (e.g., or denial if the transaction is to be denied) of the payment transaction. The issuing financial institution 602 may also modify a message type indicator for the transaction message to indicate that the transaction message is changed to be an authorization response. In step 642, the issuing financial institution 602 may transmit (e.g., via a transaction processor) the authorization response to the transaction processing server 612.

In step 644, the transaction processing server 612 may forward the authorization response to the acquiring financial institution 610 (e.g., via a transaction processor). In step 646, the acquiring financial institution may generate a response message indicating approval or denial of the payment transaction as indicated in the response code of the authorization response, and may transmit the response message to the gateway processor 608 using the standards and protocols set forth by the gateway processor 608. In step 648, the gateway processor 608 may forward the response message to the merchant 606 using the appropriate standards and protocols. In step 650, the merchant 606 may then provide the products purchased by the consumer 604 as part of the payment transaction to the consumer 604.

In some embodiments, once the process 600 has completed, payment from the issuing financial institution 602 to the acquiring financial institution 610 may be performed. In some instances, the payment may be made immediately or within one business day. In other instances, the payment may be made after a period of time, and in response to the submission of a clearing request from the acquiring financial institution 610 to the issuing financial institution 602 via the transaction processing server 602. In such instances, clearing requests for multiple payment transactions may be aggregated into a single clearing request, which may be used by the transaction processing server 612 to identify overall payments to be made by whom and to whom for settlement of payment transactions.

In some instances, the system may also be configured to perform the processing of payment transactions in instances where communication paths may be unavailable. For example, if the issuing financial institution is unavailable to perform authorization of the transaction account (e.g., in step 640), the transaction processing server 612 may be configured to perform authorization of transactions on behalf of the issuing financial institution 602. Such actions may be referred to as "stand-in processing," where the transaction processing server "stands in" as the issuing financial institution 602. In such instances, the transaction processing server 612 may utilize rules set forth by the issuing financial institution 602 to determine approval or denial of the payment transaction, and may modify the transaction message accordingly prior to forwarding to the acquiring financial institution 610 in step 644. The transaction processing server 612 may retain data associated with transactions for which the transaction processing server 612 stands in, and may transmit the retained data to the issuing financial institution 602 once communication is reestablished. The issuing financial institution 602 may then process transaction accounts accordingly to accommodate for the time of lost communication.

In another example, if the transaction processing server 612 is unavailable for submission of the authorization request by the acquiring financial institution 610, then the transaction processor at the acquiring financial institution 610 may be configured to perform the processing of the transaction processing server 612 and the issuing financial institution 602. The transaction processor may include rules and data suitable for use in making a determination of approval or denial of the payment transaction based on the data included therein. For instance, the issuing financial institution 602 and/or transaction processing server 612 may set limits on transaction type, transaction amount, etc. that may be stored in the transaction processor and used to determine approval or denial of a payment transaction based thereon. In such instances, the acquiring financial institution 610 may receive an authorization response for the payment transaction even if the transaction processing server 612 is unavailable, ensuring that transactions are processed and no downtime is experienced even in instances where communication is unavailable. In such cases, the transaction processor may store transaction details for the payment transactions, which may be transmitted to the transaction processing server 612 (e.g., and from there to the associated issuing financial institutions 602) once communication is reestablished.

In some embodiments, transaction processors may be configured to include a plurality of different communication channels, which may utilize multiple communication cards and/or devices, to communicate with the transaction processing server 612 for the sending and receiving of transaction messages. For example, a transaction processor may be comprised of multiple computing devices, each having multiple communication ports that are connected to the transaction processing server 612. In such embodiments, the transaction processor may cycle through the communication channels when transmitting transaction messages to the transaction processing server 612, to alleviate network congestion and ensure faster, smoother communications. Furthermore, in instances where a communication channel may be interrupted or otherwise unavailable, alternative communication channels may thereby be available, to further increase the uptime of the network.

In some embodiments, transaction processors may be configured to communicate directly with other transaction processors. For example, a transaction processor at an acquiring financial institution 610 may identify that an authorization request involves an issuing financial institution 602 (e.g., via the bank identification number included in the transaction message) for which no value-added services are required. The transaction processor at the acquiring financial institution 610 may then transmit the authorization request directly to the transaction processor at the issuing financial institution 602 (e.g., without the authorization request passing through the transaction processing server 612), where the issuing financial institution 602 may process the transaction accordingly.

The methods discussed above for the processing of payment transactions that utilize multiple methods of communication using multiple communication channels, and includes fail safes to provide for the processing of payment transactions at multiple points in the process and at multiple locations in the system, as well as redundancies to ensure that communications arrive at their destination successfully even in instances of interruptions, may provide for a robust system that ensures that payment transactions are always processed successfully with minimal error and interruption. This advanced network and its infrastructure and topology may be commonly referred to as "payment rails," where transaction data may be submitted to the payment rails from merchants at millions of different points of sale, to be routed through the infrastructure to the appropriate transaction *processing* servers 612 for *processing.* The payment rails may be such that a general purpose computing device may be unable to properly format or submit communications to the rails, without specialized programming and/or configuration. Through the specialized purposing of a computing device, the computing device may be configured to submit transaction data to the appropriate entity (e.g., a gateway processor 608, acquiring financial institution 610, etc.) for processing using this advanced network, and to quickly and efficiently receive a response regarding the ability for a consumer 604 to fund the payment transaction.

### Computer System Architecture

FIG. 7 illustrates a computer system 700 in which embodiments of the present disclosure, or portions thereof, may be implemented as computer-readable code. For example, the processing server 102 of FIG. 1 *may* be implemented in the computer system 700 using hardware, software, firmware, non-transitory computer readable media having instructions stored thereon, or a combination thereof and may be implemented in one or more computer systems or other processing systems. Hardware, software, or any combination thereof may embody modules and components used to implement the methods of FIGS. 3, 5, and 6.

If programmable logic is used, such logic may execute on a commercially available processing platform or a special purpose device. A person having ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device. For instance, at least one processor device and a memory may be used to implement the above described embodiments.

A processor unit or device as discussed herein may be a single processor, a plurality of processors, or combinations thereof. Processor devices may have one or more processor "cores." The terms "computer program medium," "non-transitory computer readable medium," and "computer usable medium" as discussed herein are used to generally refer to tangible media such as a removable storage unit 718, a removable storage unit 722, and a hard disk installed in hard disk drive 712.

Various embodiments of the present disclosure are described in terms of this example computer system 700. After reading this description, it will become apparent to a person skilled in the relevant art how to implement the present disclosure using other computer systems and/or computer architectures. Although operations may be described as a sequential process, some of the operations may in fact be performed in parallel, concurrently, and/or in a distributed environment, and with program code stored locally or remotely for access by single or multi-processor machines. In addition, in some embodiments the order of operations may be rearranged without departing from the scope of the claims.

Processor device 704 may be a special purpose or a general purpose processor device. The processor device 704 may be connected to a communications infrastructure 706, such as a bus, message queue, network, multi-core message-passing scheme, etc. The network may be any network suitable for performing the functions as disclosed herein and may include a local area network (LAN), a wide area network (WAN), a wireless network (e.g., WiFi), a mobile communication network, a satellite network, the Internet, fiber optic, coaxial cable, infrared, radio frequency (RF), or any combination thereof. Other suitable network types and configurations will be apparent to persons having skill in the relevant art. The computer system 700 may also include a main memory 708 (e.g., random access memory, read-only memory, etc.), and may also include a secondary memory 710. The secondary memory 710 may include the hard disk drive 712 and a removable storage drive 714, such as a floppy disk drive, a magnetic tape drive, an optical disk drive, a flash memory, etc.

The removable storage drive 714 may read from and/or write to the removable storage unit 718 in a well-known manner. The removable storage unit 718 may include a removable storage media that may be read by and written to by the removable storage drive 714. For example, if the removable storage drive 714 is a floppy disk drive or universal serial bus port, the removable storage unit 718 may be a floppy disk or portable flash drive, respectively. In one embodiment, the removable storage unit 718 may be non-transitory computer readable recording media.

In some embodiments, the secondary memory 710 may include alternative means for allowing computer programs or other instructions to be loaded into the computer system 700, for example, the removable storage unit 722 and an interface 720. Examples of such means may include a program cartridge and cartridge interface (e.g., as found in video game systems), a removable memory chip (e.g., EEPROM, PROM, etc.) and associated socket, and other removable storage units 722 and interfaces 720 as will be apparent to persons having skill in the relevant art.

Data stored in the computer system 700 (e.g., in the main memory 708 and/or the secondary memory 710) may be stored on any type of suitable computer readable media, such as optical storage (e.g., a compact disc, digital versatile disc, Blu-ray disc, etc.) or magnetic tape storage (e.g., a hard disk drive). The data may be configured in any type of suitable database configuration, such as a relational database, a structured query language (SQL) database, a distributed database, an object database, etc. Suitable configurations and storage types will be apparent to persons having skill in the relevant art.

The computer system 700 may also include a communications interface 724. The communications interface 724 may be configured to allow software and data to be transferred between the computer system 700 and external devices. Exemplary communications interfaces 724 may include a modem, a network interface (e.g., an Ethernet card), a communications port, a PCMCIA slot and card, etc. Software and data transferred via the communications interface 724 may be in the form of signals, which may be electronic, electromagnetic, optical, or other signals as will be apparent to persons having skill in the relevant art. The signals may travel via a communications path 726, which may be configured to carry the signals and may be implemented using wire, cable, fiber optics, a phone line, a cellular phone link, a radio frequency link, etc.

The computer system 700 may further include a display interface 702. The display interface 702 may be configured to allow data to be transferred between the computer system 700 and external display 730. Exemplary display interfaces 702 may include high-definition multimedia interface (HDMI), digital visual interface (DVI), video graphics array (VGA), etc. The display 730 may be any suitable type of display for displaying data transmitted via the display interface 702 of the computer system 700, including a cathode ray tube (CRT) display, liquid crystal display (LCD), light-emitting diode (LED) display, capacitive touch display, thin-film transistor (TFT) display, etc.

Computer program medium and computer usable medium may refer to memories, such as the main memory 708 and secondary memory 710, which may be memory semiconductors (e.g., DRAMs, etc.). These computer program products may be means for providing software to the computer system 700. Computer programs (e.g., computer control logic) may be stored in the main memory 708 and/or the secondary memory 710. Computer programs may also be received via the communications interface 724. Such computer programs, when executed, may enable computer system 700 to implement the present methods as discussed herein. In particular, the computer programs, when executed, may enable processor device 704 to implement the methods illustrated by FIGS. 3, 5, and 6, as discussed herein. Accordingly, such computer programs may represent controllers of the computer system 700. Where the present disclosure is implemented using software, the software may be stored in a computer program product and loaded into the computer system 700 using the removable storage drive 714, interface 720, and hard disk drive 712, or communications interface 724.

The processor device 704 may comprise one or more modules or engines configured to perform the functions of the computer system 700. Each of the modules or engines may be implemented using hardware and, in some instances, may also utilize software, such as corresponding to program code and/or programs stored in the main memory 708 or secondary memory 710. In such instances, program code may be compiled by the processor device 704 (e.g., by a compiling module or engine) prior to execution by the hardware of the computer system 700. For example, the program code may be source code written in a programming language that is translated into a lower level language, such as assembly language or machine code, for execution by the processor device 704 and/or any additional hardware components of the computer system 700. The process of compiling may include the use of lexical analysis, preprocessing, parsing, semantic analysis, syntax-directed translation, code generation, code optimization, and any other techniques that may be suitable for translation of program code into a lower level language suitable for controlling the computer system 700 to perform the functions disclosed herein. It will be apparent to persons having skill in the relevant art that such processes result in the computer system 700 being a specially configured computer system 700 uniquely programmed to perform the functions discussed above.

Techniques consistent with the present disclosure provide, among other features, systems and methods for determining a confidence level for provisioning of a token to a mobile device based on device data. While various exemplary embodiments of the disclosed system and method have been described above it should be understood that they have been presented for purposes of example only, not limitations. It is not exhaustive and does not limit the disclosure to the precise form disclosed. Modifications and variations are possible in light of the above teachings or may be acquired from practicing of the disclosure, without departing from the scope of the claims.

## Claims

1. A method for determining a confidence level for provisioning of a token to a mobile device based on device data, comprising:
storing, in an account database of a processing server, an account profile, wherein the account profile includes data related to a transaction account including at least an account identifier and device fingerprint data associated with a mobile communication device;
receiving, by a receiving device of the processing server, a data signal via a mobile network operator comprising location data, wherein the location data includes a plurality of geographic locations of the mobile communication device identified by the mobile network operator over a predetermined period of time;
receiving, by the receiving device of the processing server, a data signal comprising a confidence level request, wherein the confidence level request includes at least a supplied device fingerprint and a current location of the mobile communication device;
identifying, by a processing device of the processing server, a first geographic area of validity for the mobile communication device based on application of one or more algorithms to the plurality of geographic locations;
identifying, by the processing device of the processing server, a second geographic area of validity for the related transaction account based on application of one or more algorithms to a geographic location associated with each of a plurality of payment transactions involving the related transaction account;
identifying, by the processing device of the processing server, a confidence level based on at least a correspondence between (i) the supplied device fingerprint included in the confidence level request and the device fingerprint data included in the account profile, (ii) the current location of the mobile communication device included in the confidence level request and the identified first geographic area of validity for the mobile communication device, and (iii) the current location of the mobile communication device included in the confidence level request and the identified second geographic area of validity for the related transaction account; and
electronically transmitting, by a transmitting device of the processing server, the identified confidence level as a data signal in response to the received data signal comprising the confidence level request and the data signal is superimposed with an instruction configured to instruct a provisioning device to provision a payment token to the mobile communication device if the identified confidence level exceeds a predetermined threshold.

2. The method of claim 1, wherein the data signal comprising the location data is received from the mobile communication device via the mobile network operator.

3. The method of claim 1, further comprising:
receiving, by the receiving device of the processing server, a data signal via a payment network comprising transaction data, wherein the transaction data includes data associated with a plurality of payment transactions involving the related transaction account including at least the respective associated geographic location.

4. The method of claim 1, further comprising:
storing, in a transaction database of the processing server, a plurality of transaction data entries, wherein each transaction data entry includes data related to one of the plurality of payment transactions involving the related transaction account including at least the associated geographic location.

5. The method of claim 1, wherein the account profile further includes a plurality of transaction data entries, wherein each transaction data entry includes data related to one of the plurality of payment transactions involving the related transaction account including at least the associated geographic location.

6. The method of claim 1, wherein the account profile is further configured to store the payment token associated with payment data corresponding to the related transaction account.

7. The method of claim 1, wherein the data signal comprising the confidence level request is received from the mobile communication device.

8. The method of claim 1, wherein the data signal comprising the confidence level request is received from the provisioning device of the processing server.

9. The method of claim 1, wherein
the data signal comprising the confidence level request is received via a payment network.

10. A system for determining a confidence level for provisioning of a token to a mobile device based on device data, comprising:
an account database of a processing server configured to store an account profile, wherein the account profile includes data related to a transaction account including at least an account identifier and device fingerprint data associated with a mobile communication device;
a receiving device of the processing server configured to receive a data signal via a mobile network operator comprising location data, wherein the location data includes a plurality of geographic locations of the mobile communication device identified by the mobile network operator over a predetermined period of time, and
a data signal comprising a confidence level request, wherein the confidence level request includes at least a supplied device fingerprint and a current location of the mobile communication device;
a processing device of the processing server configured to:
identify a first geographic area of validity for the mobile communication device based on application of one or more algorithms to the plurality of geographic locations,
identify a second geographic area of validity for the related transaction account based on application of one or more algorithms to a geographic location associated with each of a plurality of payment transactions involving the related transaction account, and
identify a confidence level based on at least a correspondence between (i) the supplied device fingerprint included in the confidence level request and the device fingerprint data included in the account profile, (ii) the current location of the mobile communication device included in the confidence level request and the identified first geographic area of validity for the mobile communication device, and (iii) the current location of the mobile communication device included in the confidence level request and the identified second geographic area of validity for the related transaction account; and
a transmitting device of the processing server configured to electronically transmit the identified confidence level as a data signal in response to the received data signal comprising the confidence level request and the data signal is superimposed with an instruction configured to instruct a provisioning device to provision a payment token to the mobile communication device if the identified confidence level exceeds a predetermined threshold.

11. The system of claim 10, wherein the data signal comprising the location data is received from the mobile communication device via the mobile network operator.

12. The system of claim 10, wherein the receiving device of the processing server is further configured to receive a data signal via a payment network comprising transaction data, wherein the transaction data includes data associated with a plurality of payment transactions involving the related transaction account including at least the respective associated geographic location.

13. The system of claim 10, further comprising:
a transaction database of the processing server configured to store a plurality of transaction data entries, wherein each transaction data entry includes data related to one of the plurality of payment transactions involving the related transaction account including at least the associated geographic location.

14. The system of claim 10, wherein the account profile further includes a plurality of transaction data entries, wherein each transaction data entry includes data related to one of the plurality of payment transactions involving the related transaction account including at least the associated geographic location.

## Patentansprüche

1. Verfahren zum Bestimmen eines Vertrauensniveaus für die Bereitstellung eines Tokens für eine mobile Vorrichtung basierend auf Vorrichtungsdaten, umfassend:
Speichern eines Kontoprofils in einer Kontodatenbank eines Verarbeitungsservers, wobei das Kontoprofil Daten enthält, die sich auf ein Transaktionskonto beziehen, das mindestens eine Kontokennung und Vorrichtungsfingerabdruckdaten enthält, die einer mobilen Kommunikationsvorrichtung zugeordnet sind;
Empfangen, durch eine Empfangsvorrichtung des Verarbeitungsservers, eines Datensignals über einen Betreiber eines mobilen Netzwerks, das Standortdaten umfasst, wobei die Standortdaten eine Vielzahl von geographischen Standorten der mobilen Kommunikationsvorrichtung enthalten, die von dem Betreiber des mobilen Netzwerks über eine vorbestimmte Zeitspanne identifiziert wurden;
Empfangen, durch die Empfangsvorrichtung des Verarbeitungsservers, eines Datensignals, das eine Vertrauensniveauanforderung umfasst, wobei die Vertrauensniveauanforderung mindestens einen gelieferten Vorrichtungsfingerabdruck und einen aktuellen Standort der mobilen Kommunikationsvorrichtung enthält;
Identifizieren, durch eine Verarbeitungsvorrichtung des Verarbeitungsservers, eines ersten geographischen Gültigkeitsbereichs für die mobile Kommunikationsvorrichtung basierend auf der Anwendung eines oder mehrerer Algorithmen auf die Vielzahl von geographischen Standorten,
Identifizieren, durch die Verarbeitungsvorrichtung des Verarbeitungsservers, eines zweiten geografischen Gültigkeitsbereichs für das zugehörige Transaktionskonto basierend auf der Anwendung eines oder mehrerer Algorithmen auf einen geografischen Standort, der jeder aus einer Vielzahl von Zahlungstransaktionen zugeordnet ist, die das zugehörige Transaktionskonto betreffen;
Identifizieren, durch die Verarbeitungsvorrichtung des Verarbeitungsservers, eines Vertrauensniveaus basierend auf mindestens einer Entsprechung zwischen Folgendem: (i) dem gelieferten Vorrichtungsfingerabdruck, der in der Vertrauensniveauanforderung enthalten ist, und den Vorrichtungsfingerabdruckdaten, die in dem Kontoprofil enthalten sind, (ii) dem aktuellen Standort der mobilen Kommunikationsvorrichtung, der in der Vertrauensniveauanforderung enthalten ist, und dem identifizierten ersten geografischen Gültigkeitsbereich für die mobile Kommunikationsvorrichtung, und (iii) dem aktuellen Standort der mobilen Kommunikationsvorrichtung, der in der Vertrauensniveauanforderung enthalten ist, und dem identifizierten zweiten geographischen Gültigkeitsbereich für das zugehörige Transaktionskonto; und
elektronisches Übertragen, durch eine Sendevorrichtung des Verarbeitungsservers, des identifizierten Vertrauensniveaus als ein Datensignal in Reaktion auf das empfangene Datensignal, das die Vertrauensniveauanforderung umfasst, und wobei das Datensignal mit einer Anweisung überlagert wird, die dafür konfiguriert ist, eine Bereitstellungsvorrichtung anzuweisen, ein Zahlungs-Token für die mobile Kommunikationsvorrichtung bereitzustellen, wenn das identifizierte Vertrauensniveau einen vorbestimmten Schwellenwert überschreitet.

2. Verfahren nach Anspruch 1, wobei das Datensignal, das die Standortdaten umfasst, von der mobilen Kommunikationsvorrichtung über den Betreiber des mobilen Netzwerks empfangen wird.

3. Verfahren nach Anspruch 1, das ferner Folgendes umfasst:
Empfangen, durch die Empfangsvorrichtung des Verarbeitungsservers, eines Datensignals über ein Zahlungsnetzwerk, das Transaktionsdaten umfasst, wobei die Transaktionsdaten Daten enthalten, die einer Vielzahl von Zahlungstransaktionen zugeordnet sind, an denen das zugehörige Transaktionskonto beteiligt ist, das zumindest den jeweils zugeordneten geografischen Standort enthält.

4. Verfahren nach Anspruch 1, das ferner Folgendes umfasst:
Speichern, in einer Transaktionsdatenbank des Verarbeitungsservers, einer Vielzahl von Transaktionsdateneinträgen, wobei jeder Transaktionsdateneintrag Daten enthält, die sich auf eine der Vielzahl von Zahlungstransaktionen beziehen, an denen das zugehörige Transaktionskonto beteiligt ist, das mindestens den zugehörigen geografischen Standort enthält.

5. Verfahren nach Anspruch 1, wobei das Kontoprofil ferner eine Vielzahl von Transaktionsdateneinträgen enthält, wobei jeder Transaktionsdateneintrag Daten enthält, die sich auf eine der Vielzahl von Zahlungstransaktionen beziehen, an denen das zugehörige Transaktionskonto beteiligt ist, das mindestens den zugehörigen geografischen Standort enthält.

6. Verfahren nach Anspruch 1, wobei das Kontoprofil ferner dafür konfiguriert ist, das Zahlungs-Token zu speichern, das den Zahlungsdaten zugeordnet ist, die dem zugehörigen Transaktionskonto entsprechen.

7. Verfahren nach Anspruch 1, wobei das Datensignal, das die Vertrauensniveauanforderung umfasst, von der mobilen Kommunikationsvorrichtung empfangen wird.

8. Verfahren nach Anspruch 1, wobei das Datensignal, das die Vertrauensniveauanforderung umfasst, von der Bereitstellungsvorrichtung des Verarbeitungsservers empfangen wird.

9. Verfahren nach Anspruch 1, wobei
das Datensignal, das die Vertrauensniveauanforderung umfasst, über ein Netzwerk für Zahlungen empfangen wird.

10. System zum Bestimmen eines Vertrauensniveaus für die Bereitstellung eines Tokens für eine mobile Vorrichtung basierend auf Vorrichtungsdaten, umfassend:
eine Kontodatenbank eines Verarbeitungsservers, die dafür konfiguriert ist, ein Kontoprofil zu speichern, wobei das Kontoprofil Daten enthält, die sich auf ein Transaktionskonto beziehen, das mindestens eine Kontokennung und Vorrichtungsfingerabdruckdaten enthält, die einer mobilen Kommunikationsvorrichtung zugeordnet sind;
eine Empfangsvorrichtung des Verarbeitungsservers, die dafür konfiguriert ist, ein Datensignal über einen Betreiber eines mobilen Netzwerks zu empfangen, das Standortdaten umfasst, wobei die Standortdaten eine Vielzahl von geographischen Standorten der mobilen Kommunikationsvorrichtung enthalten, die von dem Betreiber des mobilen Netzwerks über eine vorbestimmte Zeitspanne identifiziert wurden, und
ein Datensignal, das eine Vertrauensniveauanforderung umfasst, wobei die Vertrauensniveauanforderung mindestens einen gelieferten Vorrichtungsfingerabdruck und einen aktuellen Standort der mobilen Kommunikationsvorrichtung enthält;
eine Verarbeitungsvorrichtung des Verarbeitungsservers, die für Folgendes konfiguriert ist:
Identifizieren eines ersten geographischen Gültigkeitsbereichs für die mobile Kommunikationsvorrichtung basierend auf der Anwendung eines oder mehrerer Algorithmen auf die Vielzahl von geographischen Standorten,
Identifizieren eines zweiten geografischen Gültigkeitsbereichs für das zugehörige Transaktionskonto basierend auf der Anwendung eines oder mehrerer Algorithmen auf einen geografischen Standort, der jeder aus einer Vielzahl von Zahlungstransaktionen zugeordnet ist, die das zugehörige Transaktionskonto betreffen, und
Identifizieren eines Vertrauensniveaus basierend auf mindestens einer Übereinstimmung zwischen Folgendem: (i) dem gelieferten Vorrichtungsfingerabdruck, der in der Vertrauensniveauanforderung enthalten ist, und den Vorrichtungsfingerabdruckdaten, die in dem Kontoprofil enthalten sind, (ii) dem aktuellen Standort der mobilen Kommunikationsvorrichtung, der in der Vertrauensniveauanforderung enthalten ist, und dem identifizierten ersten geografischen Gültigkeitsbereich für die mobile Kommunikationsvorrichtung, und (iii) dem aktuellen Standort der mobilen Kommunikationsvorrichtung, der in der Vertrauensniveauanforderung enthalten ist, und dem identifizierten zweiten geographischen Gültigkeitsbereich für das zugehörige Transaktionskonto; und
eine Sendevorrichtung des Verarbeitungsservers die dafür konfiguriert ist, das identifizierte Vertrauensniveau als ein Datensignal in Reaktion auf das empfangene Datensignal, das die Vertrauensniveauanforderung umfasst, elektronisch zu senden, und wobei das Datensignal mit einer Anweisung überlagert wird, die dafür konfiguriert ist, eine Bereitstellungsvorrichtung anzuweisen, ein Zahlungs-Token für die mobile Kommunikationsvorrichtung bereitzustellen, wenn das identifizierte Vertrauensniveau einen vorbestimmten Schwellenwert überschreitet.

11. System nach Anspruch 10, wobei das Datensignal, das die Standortdaten umfasst, von der mobilen Kommunikationsvorrichtung über den Betreiber des mobilen Netzwerks empfangen wird.

12. System nach Anspruch 10, wobei die Empfangsvorrichtung des Verarbeitungsservers ferner dafür konfiguriert ist, ein Datensignal über ein Zahlungsnetzwerk zu empfangen, das Transaktionsdaten umfasst, wobei die Transaktionsdaten Daten enthalten, die einer Vielzahl von Zahlungstransaktionen zugeordnet sind, an denen das zugehörige Transaktionskonto beteiligt ist, das zumindest den jeweils zugeordneten geografischen Standort enthält.

13. System nach Anspruch 10, das ferner Folgendes umfasst:
eine Transaktionsdatenbank des Verarbeitungsservers, die dafür konfiguriert ist, eine Vielzahl von Transaktionsdateneinträgen zu speichern, wobei jeder Transaktionsdateneintrag Daten enthält, die sich auf eine der Vielzahl von Zahlungstransaktionen beziehen, an denen das zugehörige Transaktionskonto beteiligt ist, das mindestens den zugehörigen geografischen Standort enthält.

14. System nach Anspruch 10, wobei das Kontoprofil ferner eine Vielzahl von Transaktionsdateneinträgen enthält, wobei jeder Transaktionsdateneintrag Daten enthält, die sich auf eine der Vielzahl von Zahlungstransaktionen beziehen, an denen das zugehörige Transaktionskonto beteiligt ist, das mindestens den zugehörigen geografischen Standort enthält.

## Revendications

1. Procédé servant à déterminer un niveau de confiance pour la mise à disposition d'un jeton à un dispositif mobile en se basant sur des données du dispositif, comportant les étapes consistant à :
stocker, dans une base de données de comptes d'un serveur de traitement, un profil de compte, dans lequel le profil de compte comprend des données se rapportant à un compte de transactions comprenant au moins un identifiant de compte et des données d'empreintes digitales de dispositif qui sont associées à un dispositif de communication mobile ;
recevoir, par un dispositif de réception du serveur de traitement, un signal de données par le biais d'un opérateur de réseau mobile comportant des données d'emplacements, dans lequel les données d'emplacements comprennent une pluralité d'emplacements géographiques du dispositif de communication mobile qui ont été identifiés par l'opérateur de réseau mobile au cours d'une période de temps prédéterminée ;
recevoir, par le dispositif de réception du serveur de traitement, un signal de données comportant une demande de niveau de confiance, dans lequel la demande de niveau de confiance comprend au moins une empreinte digitale du dispositif ayant été fournie et un emplacement en cours du dispositif de communication mobile ;
identifier, par un dispositif de traitement du serveur de traitement, une première zone de validité géographique pour le dispositif de communication mobile en se basant sur l'application d'un ou de plusieurs algorithmes sur la pluralité d'emplacements géographiques ;
identifier, par le dispositif de traitement du serveur de traitement, une deuxième zone de validité géographique pour le compte de transactions associé en se basant sur l'application d'un ou de plusieurs algorithmes sur un emplacement géographique associé à chacune d'une pluralité de transactions de paiement impliquant le compte de transactions associé ;
identifier, par le dispositif de traitement du serveur de traitement, un niveau de confiance en se basant sur au moins une correspondance entre (i) l'empreinte digitale du dispositif ayant été fournie qui est comprise dans la demande de niveau de confiance et les données d'empreintes digitales de dispositif qui sont comprises dans le profil de compte, (ii) l'emplacement en cours du dispositif de communication mobile qui est compris dans la demande de niveau de confiance et la première zone de validité géographique ayant été identifiée pour le dispositif de communication mobile, et (iii) l'emplacement en cours du dispositif de communication mobile qui est compris dans la demande de niveau de confiance et la deuxième zone de validité géographique ayant été identifiée pour le compte de transactions associé ; et
transmettre électroniquement, par un dispositif de transmission du serveur de traitement, le niveau de confiance ayant été identifié sous la forme d'un signal de données en réponse au signal de données reçu comportant la demande de niveau de confiance et le signal de données est superposé par une instruction configurée pour ordonner à un dispositif de mise à disposition de mettre à disposition un jeton de paiement au dispositif de communication mobile si le niveau de confiance ayant été identifié dépasse un seuil prédéterminé.

2. Procédé selon la revendication 1, dans lequel le signal de données comportant les données d'emplacements est reçu en provenance du dispositif de communication mobile par le biais de l'opérateur de réseau mobile.

3. Procédé selon la revendication 1, comportant par ailleurs l'étape consistant à :
recevoir, par le dispositif de réception du serveur de traitement, un signal de données par le biais d'un réseau de paiement comportant des données de transaction, dans lequel les données de transaction comprennent des données associées à une pluralité de transactions de paiement impliquant le compte de transactions associé comprenant au moins l'emplacement géographique associé respectif.

4. Procédé selon la revendication 1, comportant par ailleurs l'étape consistant à :
stocker, dans une base de données de transactions du serveur de traitement, une pluralité d'entrées de données de transactions, dans lequel chaque entrée de données de transactions comprend des données associées à l'une de la pluralité de transactions de paiement impliquant le compte de transactions associé comprenant au moins l'emplacement géographique associé.

5. Procédé selon la revendication 1, dans lequel le profil de compte comprend par ailleurs une pluralité d'entrées de données de transactions, dans lequel chaque entrée de données de transactions comprend des données associées à l'une de la pluralité de transactions de paiement impliquant le compte de transactions associé comprenant au moins l'emplacement géographique associé.

6. Procédé selon la revendication 1, dans lequel le profil de compte est par ailleurs configuré pour stocker le jeton de paiement associé aux données de paiement qui correspondent au compte de transactions associé.

7. Procédé selon la revendication 1, dans lequel le signal de données comportant la demande de niveau de confiance est reçu en provenance du dispositif de communication mobile.

8. Procédé selon la revendication 1, dans lequel le signal de données comportant la demande de niveau de confiance est reçu en provenance du dispositif de mise à disposition du serveur de traitement.

9. Procédé selon la revendication 1, dans lequel
le signal de données comportant la demande de niveau de confiance est reçu par le biais d'un réseau de paiement.

10. Système servant à déterminer un niveau de confiance pour la mise à disposition d'un jeton à un dispositif mobile en se basant sur des données du dispositif, comportant :
une base de données de comptes d'un serveur de traitement configurée pour stocker un profil de compte, dans lequel le profil de compte comprend des données se rapportant à un compte de transactions comprenant au moins un identifiant de compte et des données d'empreintes digitales de dispositif qui sont associées à un dispositif de communication mobile ;
un dispositif de réception du serveur de traitement configuré pour recevoir un signal de données par le biais d'un opérateur de réseau mobile comportant des données d'emplacements, dans lequel les données d'emplacements comprennent une pluralité d'emplacements géographiques du dispositif de communication mobile qui ont été identifiés par l'opérateur de réseau mobile au cours d'une période de temps prédéterminée ; et
un signal de données comportant une demande de niveau de confiance, dans lequel la demande de niveau de confiance comprend au moins une empreinte digitale du dispositif ayant été fournie et un emplacement en cours du dispositif de communication mobile ;
un dispositif de traitement du serveur de traitement configuré pour :
identifier une première zone de validité géographique pour le dispositif de communication mobile en se basant sur l'application d'un ou de plusieurs algorithmes sur la pluralité d'emplacements géographiques,
identifier une deuxième zone de validité géographique pour le compte de transactions associé en se basant sur l'application d'un ou de plusieurs algorithmes sur un emplacement géographique associé à chacune d'une pluralité de transactions de paiement impliquant le compte de transactions associé, et
identifier un niveau de confiance en se basant sur au moins une correspondance entre (i) l'empreinte digitale du dispositif ayant été fournie qui est comprise dans la demande de niveau de confiance et les données d'empreintes digitales de dispositif qui sont comprises dans le profil de compte, (ii) l'emplacement en cours du dispositif de communication mobile qui est compris dans la demande de niveau de confiance et la première zone de validité géographique ayant été identifiée pour le dispositif de communication mobile, et (iii) l'emplacement en cours du dispositif de communication mobile qui est compris dans la demande de niveau de confiance et la deuxième zone de validité géographique ayant été identifiée pour le compte de transactions associé ; et
un dispositif de transmission du serveur de traitement configuré pour transmettre électroniquement le niveau de confiance ayant été identifié sous la forme d'un signal de données en réponse au signal de données reçu comportant la demande de niveau de confiance et le signal de données est superposé par une instruction configurée pour ordonner à un dispositif de mise à disposition de mettre à disposition un jeton de paiement au dispositif de communication mobile si le niveau de confiance ayant été identifié dépasse un seuil prédéterminé.

11. Système selon la revendication 10, dans lequel le signal de données comportant les données d'emplacements est reçu en provenance du dispositif de communication mobile par le biais de l'opérateur de réseau mobile.

12. Système selon la revendication 10, dans lequel le dispositif de réception du serveur de traitement est par ailleurs configuré pour recevoir un signal de données par le biais d'un réseau de paiement comportant des données de transaction, dans lequel les données de transaction comprennent des données associées à une pluralité de transactions de paiement impliquant le compte de transactions associé comprenant au moins l'emplacement géographique associé respectif.

13. Système selon la revendication 10, comportant par ailleurs :
une base de données de transactions du serveur de traitement configurée pour stocker une pluralité d'entrées de données de transactions, dans lequel chaque entrée de données de transactions comprend des données associées à l'une de la pluralité de transactions de paiement impliquant le compte de transactions associé comprenant au moins l'emplacement géographique associé.

14. Système selon la revendication 10, dans lequel le profil de compte comprend par ailleurs une pluralité d'entrées de données de transactions, dans lequel chaque entrée de données de transactions comprend des données associées à l'une de la pluralité de transactions de paiement impliquant le compte de transactions associé comprenant au moins l'emplacement géographique associé.
